# EUROPÄISCHE PATENTSCHRIFT

(11) **EP 1 291 307 B1**
(45) Veröffentlichungstag und Bekanntmachung des Hinweises auf die Patenterteilung: **04.08.2004**
(21) Anmeldenummer: 01120792.5
(22) Anmeldetag: 10.09.2001
(51) Int. Cl.: B65G 57/06, B65G 57/24, B65B 35/50, B65B 35/52

(54) **Verfahren und Vorrichtung zum Zentrieren beim Be- und Entpalettieren von Behältern**
Method and device for centering containers while palletising and depalletising
Méthode et système de centrage de conteneurs pendant leur empilage et désempilage

(43) Veröffentlichungstag der Anmeldung: 12.03.2003
(73) Patentinhaber: Schaefer Förderanlagen- und Maschinenbau GmbH, 85774 Unterföhring (DE)
(72) Erfinder: Prechtl Robert, 85521 Ottobrunn (DE); Kötzinger Hubert, 80469 München (DE)
(74) Vertreter: Stahl, Gerhard F.W.

(56) Entgegenhaltungen:
- EP-A- 0 195 915
- WO-A-00/71451
- FR-A- 2 320 881
- US-A- 4 551 052

## Beschreibung

Die Erfindung betrifft ein Verfahren zum Zentrieren beim Be- und Entpalettieren von auf Zwischenlagen lagenweise angeordneten Behältern, insbesondere Flaschen, bei dem während des Be- und Entpalettiervorgangs die randnahen Behälter zumindest der obersten Lage wenigstens an zwei Seiten mit Schachtwänden geführt werden. Die Erfindung betrifft ferner eine Vorrichtung zur Durchführung eines solchen Verfahrens.

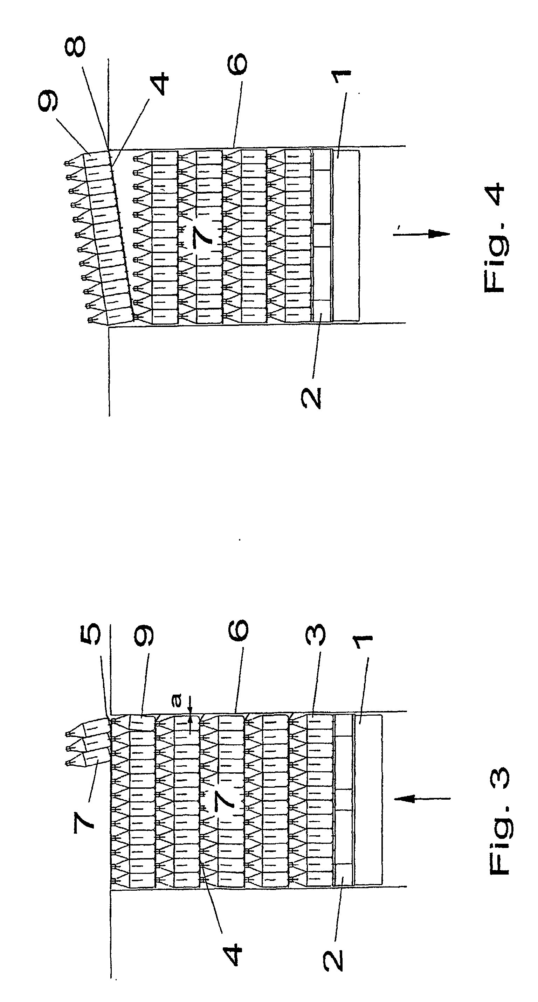

Zum Be- und Entpalettieren von lagenweise angeordneten Behältern, insbesondere Flaschen, ist eine Vorrichtung der in den Fig. 3 und 4 gezeigten Bauart bekannt. Auf einer Palette 2 ist ein aus Flaschen 3 gebildeter Flaschenblock angeordnet. Der Flaschenblock besteht aus mehreren auf Zwischenlagen 4 angeordneten Schichten 7 von Flaschen 3. Die Palette 2 ruht auf einem beweglichen Teil eines Hubwerks 1, mit dem sie zum schichtweisen Be- oder Entladen abgesenkt bzw. angehoben werden kann.

Es ist auch eine andere Bauart einer Vorrichtung zum Be- und Entpalettieren bekannt, bei der die Palette während des Be- und Entladevorgangs vertikal ortsfest ist und der Block schichtweise von unten nach oben gebildet bzw. von oben nach unten abgebaut wird, d. h. die Beladeebene bewegt sich vertikal (vgl. WO 0071451).

Bei den bekannten gattungsgemäßen Vorrichtungen werden sämtliche Flaschenschichten 7 während des Be- und Entladevorgangs an mindestens drei Seiten mittels hoher Schachtwände 6 und auf der vierten Seite von einer Tür oder einer niedrigen Schachtwand geführt. Während die Tür annähernd die gleiche Höhe wie der Flaschenblock hat, erfaßt die niedrige Schachtwand nur die obersten Schichten 7. Dies dient dazu, den Flaschenblock vor dem Be- oder Entladen auszurichten und während des Ladevorgangs zu stabilisieren. Die Schachtwände 6 sind starr und feststehend ausgebildet, so daß die Flaschen 3 und die Zwischenlagen 4 beim Be- und Entladen an den Schachtwänden 6 gleitend reiben. Außerdem müssen diese starren Schachtwände 6 auf ein lichtes Maß eingestellt werden, das zumindest etwas größer ist als die Außenabmessungen der sich dazwischen bewegenden Palette 2. Bei Flaschenschichten 7, die geringere Außenabmessungen haben als die Palette 2, ergibt sich somit ein größerer Abstand a (Fig. 3) zwischen den randseitigen Flaschen 9 einer Schicht 7 und der Schachtwand 6. Dies begünstigt aber ein Verbiegen der zumeist aus Flachkarton bestehenden Zwischenlagen, da diese weiter überstehen.

In Fig. 3 ist der Entpalettiervorgang dargestellt. Wenn Flaschen mit geringer Standfestigkeit auf Zwischenlagen aus Flachkarton entpalettiert werden, kann es dazu kommen, daß diese Zwischenlagen 4 dort, wo der Flaschenblock an der feststehenden Schachtwand 6 anliegt, durch die Reibkräfte nach unten verbogen werden. Wenn die randseitigen Flaschen 9 der obersten Schicht beim Herausheben aus dem Führungsschacht auf einer derartig deformierten Zwischenlage 5 stehen, dann schnellt diese beim Freiwerden plötzlich nach oben, die Flaschen werden hochgeschleudert und können umfallen, was zu Störungen im automatischen Ablauf der gesamten Maschine führt. Diese Gefahr ist bei leichten Flaschen, wie z. B. leere PET Flaschen besonders groß.

Bei Flaschenschichten 7, die kleinere Abmessungen haben als die größte Palette 2, welche die lichte Weite des Führungsschachtes bestimmt, können die randseitigen Flaschen 9 auch schon im Bereich des Führungsschachtes nach außen kippen, wodurch die Neigung zum Umfallen beim Herausheben aus dem Schacht noch vergrößert wird.

Der Palettiervorgang ist in Fig. 4 dargestellt. Beim Palettieren kann es vorkommen, daß eine Zwischenlage 4 beim Absenken in den Führungsschacht am oberen Schachtrand 8 einseitig hängen bleibt. Aufgrund ihres geringen Gewichtes sind die auf der Zwischenlage 4 stehenden Flaschen 3 nicht imstande, die Zwischenlage beim weiteren Absenken in den Führungsschacht zu drücken. Die Zwischenlage 4 stellt sich daher schräg, und die Flaschen 3 stürzen um, was eine längere Störung der gesamten Anlage zur Folge hat. Bei Flaschenschichten 7, die kleinere Abmessungen haben als die größte Palette 2, können die Flaschen 3 innerhalb des Führungsschachtes nach außen kippen, wodurch die Neigung zum Umfallen der Flaschen beim Herausfahren des Flaschenblockes aus dem Führungsschacht noch vergrößert wird.

Der Erfindung liegt die Aufgabe zugrunde, ein Verfahren und eine Vorrichtung zu dessen Durchführung zu schaffen, mit dem bzw. mit der die vorstehend geschilderten Schwierigkeiten überwunden werden können, so daß ein störungsfreier Beund Entpalettiervorgang gewährleistet ist.

Das erfindungsgemäße Verfahren ist dadurch gekennzeichnet, daß nach dem Aufbringen oder Abheben der obersten Lage die Schachtwände an den randnahen Behältern in der Art eines Rolladens ohne Relativbewegung von unten nach oben aufgerollt bzw. von oben nach unten abgerollt werden.

Zur Durchführung des erfindungsgemäßen Verfahrens wird eine Vorrichtung vorgeschlagen, umfassend einen Zentrierrahmen, der wenigsten zwei Schachtwände aufweist, die zumindest die Behälter der obersten Lage umgreifen, und ein Hubwerk zum Antrieb einer Palette oder des Zentrierrahmens. Dabei ist vorgesehen, daß die Schachtwände in der Art eines Rolladens ausgebildet sind, der um eine obere Umlenkrolle herumgeführt ist und der synchron zur Bewegung des Hubwerks antreibbar ist, derart, daß der Rolladen an den anliegenden Behältern ohne Relativbewegung auf- oder abrollt.

Wie dies eingangs erwähnt wurde, sind Vorrichtungen bekannt, bei denen die Palette während des Be- und Entladevorgangs vertikal ortsfest ist, während der mit dem Hubwerk verbundene Zentrierrahmen vertikal beweglich ist. In diesem Fall kann die Erfindung in der Weise verwirklicht werden, daß die obere Umlenkrolle jedes Rolladens im Zentrierrahmen gelagert ist. Wenn sich der Zentrierrahmen während des Be- und Entpalettiervorgangs gegenüber dem Flaschenblock vertikal bewegt, befinden sich die Rolläden ohne Relativbewegung in Anlage an den zugekehrten Seitenwänden des Flaschenblockes.

Bei einer Vorrichtung der in den Fig. 3 und 4 gezeigten Art, bei der das Hubwerk mit der Palette antriebsmäßig verbunden ist, kann die Erfindung verwirklicht werden, indem die obere Umlenkrolle jedes Rolladens ortsfest angeordnet ist. In diesem Fall bewegt sich der Rolladen gemeinsam mit der Palette, so daß er sich ohne Relativbewegung mit der zugekehrten Seitenfläche des Flaschenblockes in Anlage befindet. Die angestrebte Synchronisierung der Bewegung des Rolladens mit der vertikalen Bewegung der Palette kann auf konstruktiv einfache Art dadurch verwirklicht werden, daß das obere Ende jedes Rolladens auf eine Vorratstrommel aufgewickelt ist, daß die Vorratstrommel mit einem in Aufwickelrichtung wirkenden Drehmoment belastet ist, und daß das untere Ende jedes Rolladens mit dem die Palette abstützenden Teil des Hubwerks verbunden ist.

Weitere vorteilhafte Ausgestaltungen der Erfindung ergeben sich aus den Unteransprüchen.

Ein Ausführungsbeispiel der Erfindung ist in der Zeichnung dargestellt und wird nachfolgend näher erläutert. Es zeigen:
Fig. 1 eine schematische Seitenansicht einer Vorrichtung zum Be- und Entpalettieren von lagenweise angeordneten Behältern in einem Schnitt nach der Linie B-B in Fig. 2,
Fig. 2 einen Schnitt nach der Linie A-A in Fig. 1,
Fig. 3 und Fig. 4 eine Seitenansicht einer herkömmlichen Vorrichtung beim Entladen bzw. beim Beladen.

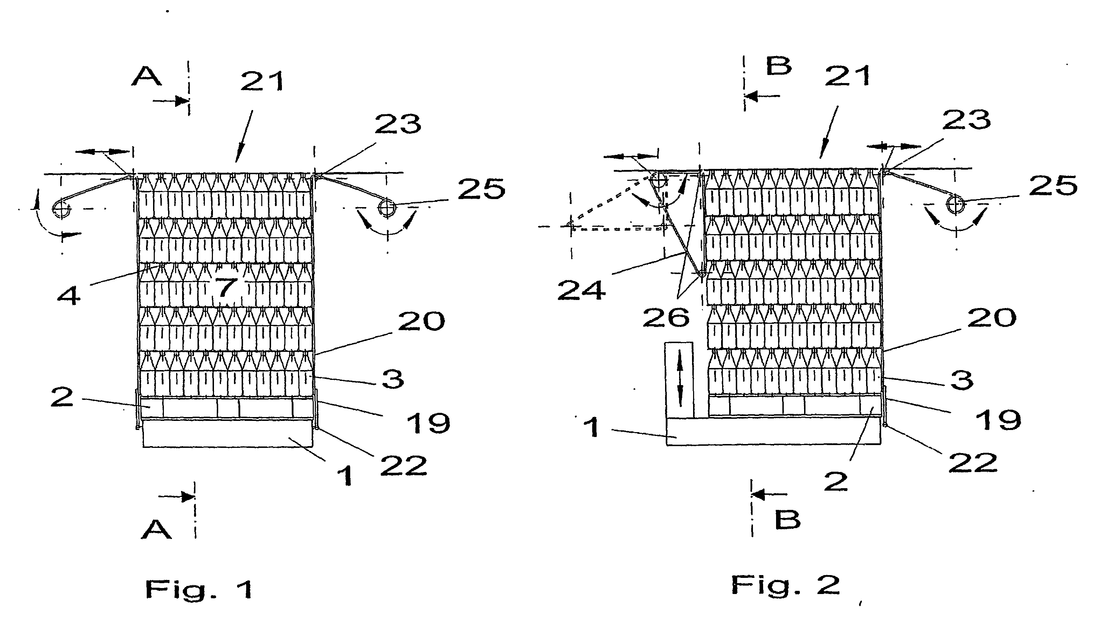

In den Fig. 1 und 2 ist eine auf einem Hubwerk 1 angeordnete Palette 2 gezeigt, auf der ein Flaschenblock 21 abgestützt ist. Der Flaschenblock 21 besteht aus leeren Flaschen, beispielsweise PET Flaschen 3, die auf Zwischenlagen 4 lagenweise angeordnet sind. Der Flaschenblock 21 ist allseitig von einem Führungsschacht umschlossen. Drei Seiten des Führungsschachtes werden von Rolläden 20 gebildet. Die Rolläden 20 enden in geringem Abstand über der Palette 2, und sie sind über Verbindungselemente 19 mit dem Hubwerk 1 verbunden. Die Anlenkpunkte 22 der Verbindungselemente 19 am Hubwerk 1 sind zur Anpassung an die Abmessungen des Flaschenblockes 21 in seitlicher Richtung verstellbar. Auf der Höhe des Flaschenblockes 21 sind Umlenkrollen 23 angeordnet. Jeder Rolladen 20 ist um die Umlenkrolle 23 herumgelegt und mit einer etwas tiefer angeordneten Aufwickeltrommel 25 verbunden. Jede Aufwickeltrommel 25 ist mit einem in Aufwickelrichtung wirkenden Drehmoment belastet. Ein solches Drehmoment kann mit einer Feder oder einem Gewicht erzeugt werden. Die vierte Seite des Führungsschachtes wird ebenfalls von einem Rolladen 24 begrenzt, der aber nicht an dem gesamten Flaschenblock 21, sondern nur an der obersten Flaschenschicht 7 anliegt. Der Rolladen 24 ist endlos und neben der Umlenkrolle 23 um zwei weitere Umlenkrollen 26 herumgelegt. Dem Rolladen 24 ist ein (nicht gezeigter) Antrieb zugeordnet, der eine Synchronbewegung mit dem Hubwerk 1 gewährleistet. Die Umlenkrollen 23 und 26 sowie die Aufwickeltrommeln 25 sind in einem (nicht gezeigten) ortsfesten Zentrierrahmen gelagert. Zur Anpassung an Flaschenschichten 7 unterschiedlicher Abmessungen sind die Umlenkrollen 23 und 26 in Querrichtung verstellbar angeordnet. Der Rolladen 24 kann zusammen mit den beiden Umlenkrollen 26 um die Achse der Umlenkrolle 23 nach oben verschwenkt werden, so daß die oberste Flaschenschicht 7 seitwärts zu- oder abgeführt werden kann.

Zum Be- und Entpalettieren wird die Palette 2 mit dem Hubwerk 1 entsprechend der Höhe einer Flaschenschicht 7 schrittweise abwärts oder aufwärts bewegt. Da die Rolläden 20 über die Verbindungselemente 19 am Hubwerk 1 befestigt sind, bewegen sie sich synchron mit diesem nach unten oder nach oben. Dies trifft sinngemäß auch für den Rolladen 24 zu. Alle Rolläden 20 und 24 bewegen sich daher mit der gleichen vertikalen Geschwindigkeit wie die Flaschenschichten 7 und die Zwischenlagen 4, so daß keine Relativbewegung erfolgt. Da die Anlenkpunkte 22 der Rolläden 20 und die Umlenkrollen 23 in Querrichtung verstellbar sind, ist unabhängig von der Größe der Palette 2 eine Anpassung an die Abmessungen der Flaschenschicht 7 möglich. Dadurch ist gewährleistet, daß alle Rolläden 20, 24 an einer Seitenfläche des Flaschenblockes 21 bzw. einer Flaschenschicht 7 anliegen und die gewünschte Zentrierung der Flaschen 3 bewirken.

Wie dies vorstehend erläutert wurde, besteht ein wesentliches Merkmal der beschriebenen Vorrichtung darin, daß die Wände des Führungsschachtes synchron zur Palette vertikal bewegbar sind, wobei ihre lichte Weite unabhängig von der Größe der Palette 2 an die Abmessungen einer Flaschenschicht 7 angepaßt werden kann. Dem Fachmann sind Mittel geläufig, wie diese Anpassung automatisiert werden kann.

Die den Führungsschacht bzw. dessen Wände bildenden Bauteile wurden vorstehend als Rolläden bezeichnet. Ein solcher Rolladen besteht üblicherweise aus einer Vielzahl gelenkig miteinander verbundener Lamellen. Für den Fachmann ist aber erkennbar, daß für die Zwecke der beschriebenen Vorrichtung auch ein Rolladen geeignet ist, der nicht aus Gliedern, sondern aus einem flexiblen Material besteht, das ein Herumführen um die Umlenkrollen 23 bzw. 26 und eine Aufwickeln auf die Aufwickeltrommeln 25 ermöglicht.

Es ist erkennbar, daß das vorstehend beschriebene Prinzip der beweglichen Führungswände auch bei einer Be- und Entpalettiervorrichtung mit ortsfest angeordneter Palette und vertikal beweglichem Zentrierrahmen angewendet werden kann. In diesem Fall könnten die unteren Enden der Rolläden ortsfest sein, während die Umlenkrollen synchron zu der Zu- oder Abnahme der Höhe des Behälterblockes bewegt werden. Es könnten aber auch an den vier Seiten des Zentrierrahmens vier endlose Rolläden angeordnet sein, die um Umlenkrollen herumgelegt sind, wie dies in der linken Hälfte von Fig. 2 dargestellt ist. Diese Rolladen müßten synchron zu der vertikalen Bewegung des Zentrierrahmens angetrieben werden, so daß zwischen den Rolläden und den gestapelten Behältern keine Relativbewegung erfolgt.

### Bezugzeichenliste:

- 1: Hubwerk
- 2: Palette
- 3: Flaschen
- 4: Zwischenlagen
- 5: deformierte Zwischenlage
- 6: Schachtwände
- 7: Flaschenschicht
- 8: Schachtrand
- 9: randseitige Flasche
- 19: Verbindungselemente
- 20: Rolläden
- 21: Flaschenblock
- 22: Anlenkpunkte
- 23: Umlenkrollen
- 24: Rolladen
- 25: Aufwickeltrommeln
- 26: Umlenkrollen

## Patentansprüche

1. Verfahren zum Zentrieren beim Be- und Entpalettieren von auf Zwischenlagen lagenweise angeordneten Behältern, insbesondere Flaschen, bei dem während des Be- und Entpalettiervorgangs die randnahen Behälter zumindest der obersten Lage wenigstens an zwei Seiten mit Schachtwänden geführt werden, **dadurch gekennzeichnet, daß** nach dem Aufbringen oder Abheben der obersten Lage die Schachtwände an den randnahen Behältern in der Art eines Rolladens ohne Relativbewegung von unten nach oben aufgerollt bzw. von oben nach unten abgerollt werden.

2. Vorrichtung zur Durchführung des Verfahrens nach Anspruch 1, umfassend einen Zentrierrahmen, der wenigsten zwei Schachtwände aufweist, die zumindest die Behälter der obersten Lage umgreifen, und ein Hubwerk zum Antrieb einer Palette oder des Zentrierrahmens, **dadurch gekennzeichnet, daß** die Schachtwände in der Art eines Rolladens (20, 24) ausgebildet sind, der um eine obere Umlenkrolle (23) herumgeführt ist und der synchron zur Bewegung des Hubwerks (1) antreibbar ist, derart, daß der Rolladen (20, 24) an den anliegenden Behältern (3) ohne Relativbewegung auf- oder abrollt.

3. Vorrichtung nach Anspruch 2, bei der das Hubwerk mit dem Zentrierrahmen antriebsmäßig verbunden ist, **dadurch gekennzeichnet, daß** die obere Umlenkrolle jedes Rolladens im Zentrierrahmen gelagert ist.

4. Vorrichtung nach Anspruch 3, **dadurch gekennzeichnet, daß** der Rolladen endlos ausgebildet und um eine obere und eine untere Umlenkrolle herumgeführt ist, die beide im Zentrierrahmen gelagert sind.

5. Vorrichtung nach Anspruch 2, bei der das Hubwerk (1) mit der Palette (2) antriebsmäßig verbunden ist, **dadurch gekennzeichnet, daß** die obere Umlenkrolle (23) jedes Rolladens (20, 24) ortsfest angeordnet ist.

6. Vorrichtung nach Anspruch 5, **dadurch gekennzeichnet, daß** der Rolladen (24) endlos ausgebildet und um eine obere und eine untere Umlenkrolle (23, 26) herumgeführt ist, die beide ortsfest angeordnet sind.

7. Vorrichtung nach Anspruch 4 oder 6, **dadurch gekennzeichnet, daß** dem Rolladen (24) ein mit dem Hubwerk (1) synchronisierter Antrieb zugeordnet ist.

8. Vorrichtung nach Anspruch 6, **dadurch gekennzeichnet, daß** das obere Ende jedes Rolladens (20) auf eine Aufwickeltrommel (25) aufgewickelt ist, daß die Aufwickeltrommel mit einem in Aufwickelrichtung wirkenden Drehmoment belastet ist, und daß das untere Ende jedes Rolladens (20) mit dem die Palette (2) abstützenden Teil des Hubwerks (1) verbunden ist.

9. Vorrichtung nach einem der Ansprüche 2 bis 8, **dadurch gekennzeichnet, daß** die obere Umlenkrolle (23) jedes Rolladens (20) auf oder über der Höhe des von den Behältern (3) gebildeten Blockes (21) angeordnet ist.

10. Vorrichtung nach einem der Ansprüche 2 bis 8, **dadurch gekennzeichnet, daß** vier Rolläden (20, 24) vorhanden sind, wobei die oberen Umlenkrollen (23) auf oder über der Höhe des von den Behältern (3) gebildeten Blockes (21) angeordnet sind und der hintere Rolladen (24) nur im Bereich der Behälter (3) der oberen Schicht (7) angeordnet ist.

11. Vorrichtung nach Anspruch 6 und 10, **dadurch gekennzeichnet, daß** der hintere Rolladen (24) endlos ausgebildet und um eine obere und eine untere Umlenkrolle (23, 26) herumgeführt ist, und daß die aus dem Rolladen und den beiden Umlenkrollen bestehende Einheit zum unbehinderten Ein- oder Auslaufen des von den Behältern (3) gebildeten Blockes (21) verschwenkbar ist.

12. Vorrichtung nach einem der Ansprüche 2 bis 11, **dadurch gekennzeichnet, daß** sich die Rolläden (20) nur in dem Bereich über der Palette (2) erstrecken, und daß ihr lichtes Maß annähernd dem Außenmaß des von den Behältern (3) gebildeten Blockes (21) entspricht.

13. Vorrichtung nach Anspruch 12, **dadurch gekennzeichnet, daß** die Lage der oberen Umlenkrollen (23) und die Lage der Anlenkpunkte (22) der Rolläden (20) an dem Hubwerk (1) verstellbar ist.

## Claims

1. Method for centering containers, especially bottles arranged in layers on layer pads in the field of palletising and depalletising. During palletising and depalletising, at least the containers of the top layer being close to the rims, are guided by means of shaft walls on two sides at least, **characterised in that** after deposing or removing the top layer, the shaft walls next to the containers being close to the rims, are being rolled up from the bottom to the top and vice versa being rolled down from the top to the bottom like a roller blind without any relative movement.

2. Device for carrying out the method according to claim 1, containing a guide frame with at least two shaft walls gripping at least the containers of the top layer, as well as a lifting gear for driving a pallet or the guide frame, **characterised in that** the shaft walls are built similarly to a roller blind (20, 24) being guided around an upper return roller (23) and drivable synchronously to the movement of the lifting gear (1) so that the roller blind (20, 24) rolls up or down at the containers being next to it without any relative movement.

3. Device according to claim 2. The lifting gear of the device is connected to the guide frame by a drive, **characterised in that** the upper return roller of each roller blind is stored in the guide frame.

4. Device according to claim 3, **characterised in that** the roller blind is endless. It is guided around an upper and a bottom return roller which are both stored inside the guide frame.

5. Device according to claim 2. The lifting gear (1) of the device is connected to the pallet (2) by a drive, **characterised in that** the upper return roller (23) of each roller blind (20, 24) is stationary.

6. Device according to claim 5, **characterised in that** the roller blind (24) is endless. It is guided around an upper and a bottom return roller (23, 26) which are both stationary.

7. Device according to claim 4 or 6, **characterised in that** a drive synchronised with the lifting gear (1) is assigned to the roller blind (24).

8. Device according to claim 6, **characterised in that** the top end of each roller blind (20) is winded onto a winding cylinder (25). The winding cylinder is charged with a turning moment working in winding direction. The bottom end of each roller blind (20) is connected to the lifting gear (1) supporting the pallet (2).

9. Device according to one of the claims 2 to 8, **characterised in that** the upper return roller (23) of each roller blind (20) is arranged on or above the level of the block (21) of containers (3).

10. Device according to one of the claims 2 to 8, **characterised in that** there are four roller blinds (20, 24). The upper return rollers (23) are arranged on or above the level of the block (21) of containers (3) and the back roller blind (24) is arranged only in the zone of the containers (3) of the upper layer (7).

11. Device according to claim 6 and 10, **characterised in that** the back roller blind (24) is endless. It is guided around an upper and a bottom return roller (23, 26). The unit consisting of the roller blind and of the two return rollers can be swivelled so that the infeed or the discharging of the block (21) of containers (3) is not obstructed.

12. Device according to one of the claims 2 to 11, **characterised in that** the roller blinds (20) are arranged only in the zone above the pallet (2). The inside measure of the roller blinds corresponds approximately to the outside measure of the block (21) of containers (3).

13. Device according to claim 12, **characterised in that** the position of the upper return rollers (23) and the position of the link points (22) of the roller blinds (20) can be adjusted at the lifting gear (1).

## Revendications

1. Procédé pour le centrage de récipients, en particulier de bouteilles, aménagés en couches sur intercalaires lors de la palettisation et dépalettisation. Lors du processus de palettisation et de dépalettisation, au moins les récipients de la couche supérieure qui se trouvent proches du bord sont guidés au minimum sur deux côtés avec parois de puits, **caractérisé en ce qu'**après la dépose ou la reprise de la couche supérieure, les parois de puits situées auprès des récipients proches du bord sont enroulées en amont ou déroulées en aval comme un volet roulant sans mouvement relatif.

2. Dispositif pour la réalisation du procédé selon demande 1, comprenant un cadre de centrage avec deux parois de puits au minimum qui saisissent au moins les récipients de la couche supérieure, ainsi qu'un dispositif de levage pour entraîner une palette ou le cadre de centrage, **caractérisé en ce que** les parois de puits sont conçues à la manière d'un volet roulant (20, 24) qui est guidé autour d'un galet de renvoi supérieur (23) et qui peut être entraîné de manière synchrone au mouvement du dispositif de levage (1) de sorte que le volet roulant (20, 24) soit enroulé ou déroulé sans mouvement relatif aux récipients adjacents (3).

3. Dispositif selon demande 2. Le dispositif de levage est connecté au cadre de centrage par un entraînement, **caractérisé en ce que** le galet de renvoi supérieur de chaque volet roulant est logé dans le cadre de centrage

4. Dispositif selon demande 3, **caractérisé en ce que** le volet roulant est conçu sans fin et guidé autour d'un galet de renvoi supérieur et inférieur qui sont logés dans le cadre de centrage.

5. Dispositif selon demande 2. Le dispositif de levage (1) est connecté à la palette (2) par un entraînement, **caractérisé en ce que** le galet de renvoi supérieur (23) de chaque volet roulant (20, 24) est installé de manière fixe.

6. Dispositif selon demande 5, **caractérisé en ce que** le volet roulant (24) est conçu sans fin et guidé autour d'un galet de renvoi supérieur et inférieur (23, 26) qui sont installés de manière fixe.

7. Dispositif selon demande 4 ou 6, **caractérisé en ce qu'**un entraînement synchronisé au dispositif de levage (1) est rattaché au volet roulant (24).

8. Dispositif selon demande 6, **caractérisé en ce que** le bout supérieur de chaque volet roulant (20) est enroulé sur un tambour d'enroulement (25). Le tambour d'enroulement est chargé d'un couple agissant dans le sens d'enroulement. Le bout inférieur de chaque volet roulant (20) est connecté avec la partie du dispositif de levage (1) supportant la palette (2).

9. Dispositif selon l'une des demandes 2 à 8, **caractérisé en ce que** le galet de renvoi supérieur (23) de chaque volet roulant (20) est installé au niveau ou au-dessus du niveau du bloc (21) de récipients (3).

10. Dispositif selon l'une des demandes 2 à 8, **caractérisé en ce qu'**il y a quatre volets roulants (20, 24). Les galets de renvoi supérieurs (23) sont installés au niveau ou au-dessus du niveau du bloc (21) de récipients (3). Le volet roulant postérieur (24) n'est installé que dans la zone des récipients (3) de la couche supérieure (7).

11. Dispositif selon demandes 6 et 10, **caractérisé en ce que** le volet roulant postérieur (24) est conçu sans fin et guidé autour d'un galet de renvoi supérieur et inférieur (23, 26). L'unité composée du volet roulant et des deux galets de renvoi peut être pivotée afin que l'entrée et la sortie du bloc (21) de récipients (3) ne soient pas entravées.

12. Dispositif selon l'une des demandes 2 à 11, **caractérisé en ce que** les volets roulants (20) ne sont installés que dans la zone se trouvant au-dessus de la palette (2). Les dimensions intérieures des volets roulants correspondent à peu près à la dimension extérieure du bloc (21) de récipients (3).

13. Dispositif selon demande 12, **caractérisé en ce que** la position des galets de renvoi supérieurs (23) et la position des points d'articulation (22) des volets roulants (20) peuvent être ajustées au dispositif de levage (1).
